# EUROPEAN PATENT SPECIFICATION

(11) **EP 1 628 544 B1**
(45) Date of publication and mention of the grant of the patent: **18.10.2006**
(21) Application number: 03795921.0
(22) Date of filing: 16.12.2003
(51) Int. Cl.: A23L 1/052, A23L 1/0532, A23C 9/154, A21D 13/08, A23L 1/325, A23L 1/187, A23C 19/09

(54) **METHOD FOR PREPARING A GELLED FOOD PRODUCT**
VERFAHREN ZUR HERSTELLUNG EINES GELIERTEN LEBENSMITTELS
PROCEDE POUR PRODUIRE UN PRODUIT ALIMENTAIRE GELIFIE

(30) Priority: 27.05.2003 EP 03253320; 27.05.2003 EP 03253321; 27.05.2003 EP 03253322
(43) Date of publication of application: 01.03.2006
(73) Proprietor: UNILEVER N.V., 3013 AL Rotterdam (NL); UNILEVER PLC, London, Greater London EC4P 4BQ (GB)
(72) Inventor: Blindt, Renoo Avinash, Bedford, Bedfordshire MK44 1LQ (GB); Elliott, Bronwyn, Bedford, Bedfordshire MK44 1LQ (GB)
(74) Representative: Rots, Maria Johanna Francisca
(86) International application number: PCT/EP2003/014511
(87) International publication number: WO 2004/105510

(56) References cited:
- EP-A- 0 325 315
- EP-A- 1 287 748
- WO-A-00/30470
- WO-A-98/34499
- GB-A- 2 128 871
- GB-A- 2 137 066
- US-A- 4 759 936
- US-A- 5 019 414
- US-A- 5 458 904
- PATENT ABSTRACTS OF JAPAN vol. 013, no. 227 (C-600), 25 May 1989 (1989-05-25) & JP 01 039956 A (SNOW BRAND MILK PROD CO LTD), 10 February 1989 (1989-02-10)

## Description

The invention relates to a method for preparing a gelled food product. Gelled food products such as cheesecake, gelled desserts, savory pies and quiches, can take a long time to prepare and require considerable skill to get a good product. Such products are often made with gelatin. To make cheesecake for example, according to a common recipe, the cook has to dissolve gelatin, ensure that no lumps are formed and/or take care to avoid overheating, dissolve or disperse cream cheese etc. The resulting warm mixture is poured onto a biscuit base and the product is put in a cool place to allow the gelatin to set. The preparation time can be as long as 45 minutes. The time required for the gel to set to get the product suitable for consumption is typically as long as 4 or 5 hours. Because of this, for use in for example canteens, restaurants and cafe's, such products are often prepared the day before. This can make planning difficult and may lead to shortage of products or high waste.

GB 2 128 871 describes polysaccharide gums that are marketed in the form of an aqueous gel requiring further dilution before use and the addition of other ingredients such as flavors, sugar and the like in flans and cakes and other baked goods. This is then warmed to melt the gel and applied for example by pouring or brushing and sets on cooling. GB 2 128 871 also describes a bakers' jelly that comprises a pseudo-plastic composition and has a high sugar content. The product is a mobile liquid which on heating to 80 °C sets on cooling to a firm jelly. The piping gels described in GB 2 128 871 can e.g. be used to decorate cakes and the like. The materials can also be used e.g. as flan jelly.

QimiQ ® is a gelled product made from skimmed milk, dairy cream and gelatin. It can be used for preparing e.g. creams, mousse, gateaux fillings, spreads and dips. The QimiQ is whisked and mixed with other components. It avoids the use of gelatin powder and thereby allows the preparation time to be reduced. WO 02/069 726 describes an alternative to QimiQ that avoids the use of gelatin. The product is designed to have the same functionality as QimiQ, i.e. to be structure reversible, which is intended to mean that the milk product has a gel structure that forms anew if it has been disturbed by shear e.g. by stirring. When using QimiQ or the alternative described in WO 02/069 726, after mixing the ingredients together and leaving the composition at quiescent conditions at ambient temperature or in the refrigerator, the structure becomes more firm only slowly.

Sheared gels, also referred to as microgels, have been described in the literature. EP 355 908 describes preparations constituting thermo-reversible sheared gels and their preparation. The resulting product is a fluid which can be stored indefinitely in its mobile state but which can be returned to its normal more rigid state by heating through the transition temperature of said composition, whereafter the heated solution will form a normal gel on cooling under quiescent conditions. The composition can be used as culture medium in e.g. Petri dishes with or without heating and cooling. The composition can also be used for preparing e.g. water-in-oil emulsions such as spreads, relatively viscous systems such as ointments and skin creams and less viscous systems such as deodorants. It can also as such constitute a food product such as a spread, in particular a low calorie spread.

EP 432 835 describes sheared gel preparations that are chemically set. The sheared gels, referred to as microgels, can be used for preparing e.g. edible low fat spreads and personal care products like skin creams and hair gels. Preparations constituting sheared gels or microgels are also described in US 5 338 561, US 5 508 055, US 5 593 716 and GB 2 128 871. The preparations e.g. constitute dressings, creams, sauces or gravies or are used in the preparation of such products.

EP 1 287 748 describes a liquid pastry filling comparable to so-called yellow baker's cream, that can be filled into unbaked, shaped dough e.g. in a pastry factory. The filled dough can then be baked to obtain the consumable pastry. After the baking process the filling has a firm structure. The liquid food is based on a combination of thermo-reversible gel forming hydrocolloid, hydrocolloid based on cellulose derivative and starch. The food is said to withstand baking and does not boil over during baking because the viscosity is made so high that no real boiling is involved. This is achieved by the use of cellulose derivative that thickens at high temperature. The liquid food can also be used as such, e.g. at home by the consumer. Heating can then be done in a microwave.

We have found that the preparation of gelled food products can be improved and the above-described problems can at least partially be solved. According to our method, gelled food products can be prepared quickly and without requiring much skill. The product is ready for consumption quickly, which facilitates planning and reduces the risk of out of stock situations and of product wastage. Syneresis problems can be reduced or prevented. The products can have good organoleptic quality. The present method facilitates obtaining gelled food products of consistent, high quality.

Accordingly the present invention provides a method for preparing a gelled food product comprising heating thermo-reversible sheared gel that is based on non-starch polysaccharide gelling agent and that comprises at least 1 wt% globular protein, to a temperature of 60-95°C and allowing the gel to set in a mould under quiescent conditions.

The present invention also provides a semi-finished product comprising a closed container that contains thermo-reversible sheared gel suitable for use in the present method, which sheared gel is based on non-starch polysaccharide gelling agent and comprises at least 1 wt% globular protein, which container is provided with instructions to the user to heat the sheared gel to a temperature of 60-95°C and allow the gel to set. More specifically the instructions may advise the user to allow the gel to set in a mould under quiescent conditions.

The sheared gel used may contain e.g. cream cheese and cream dispersed therein. Cheesecake can be prepared by heating some sheared gel in a microwave oven to, for example, 80°C, pouring it in a biscuit base and allowing the gel to set. The gel can be allowed to set by keeping it e.g. at ambient temperature or in a refrigerator. The thermo-reversible sheared gel is based on non-starch polysaccharide gelling agent. The time required for the product to be ready for consumption will depend on the amount. For example, small cheesecakes to be used as individual desserts can be ready for consumption 10 minutes after the heating.

A gelled food product is a product suitable for human consumption, of which at least a substantial part has a macroscopic gel structure. This part is called the gelled part of the gelled food product. Typically this gelled part of the gelled food product constitutes at least 30 vol%, preferably at least 40 vol%, especially at least 50 vol% of the product. Examples of such products can include cakes, pies, quiches, pastries and chocolate baskets that have e.g. a pastry, biscuit, chocolate or meringue base and a gelled composition on top. Alternatively, the mould may consist of vegetable material e.g. a half pepper or shaped vine leaves and the like. The gelled food product may also consist entirely or very largely of the part with the macroscopic gel structure, as can be the case for example for desserts, mousses, terrines, pate's and the like. They may optionally be decorated with e.g. fruit, whipped cream, chocolate flakes and/or sauce. The expression gelled food product excludes normal flans and the like. A typical flan only has a minor part with a macroscopic gel structure. The thin layer of jelly over the fruits and sponge or pastry base is clearly less than 30 vol% of the food product.

A sheared gel is a gel that has been sheared during setting of the gel to provide a gel in a mobile condition. As far as relevant for the present invention, a gel obtained by allowing the gel to set under quiescent conditions has a storage modulus G¹ at 20°C that is typically at least 2 times as high as the storage modulus at 20°C of the corresponding sheared gel made from the same composition by applying shear during the setting of the gel. Often G¹ at 20°C of the gel set under quiescent conditions is more than 3 times as high as Q¹ of the corresponding sheared gel at 20°C. Quiescent conditions means the absence of any agitation. Agitation encompasses actions such as shearing, stirring and shaking.

The storage modulus G¹ is suitably determined with a controlled stress rheometer from Rheometrics or equivalent apparatus with 35 mm parallel plates and a gap of 1 mm and water bath, wherein the sample is allowed 10 minutes to equilibrate and the frequency of oscillation is 1 Hz and the stress is 5 N/m2. Further details are described in EP 355 908 and "Viscoelastic Properties of Polymers" by J.D. Ferry, Chapter 1, pages 4-16 Std Book Number 471257745, published by J. Wiley & Sons Inc. For measuring the storage modulus G¹ at temperature T the sample is equilibrated at that temperature T without precedent heating to above the transition temperature.

A thermo-reversible sheared gel is a sheared gel based on a thermo-reversible gelling agent, i.e. a gelling agent that does not form a gel structure above a certain temperature but will do so at lower temperature provided sufficient gelling agent is present, i.e. at a concentration above the critical concentration. The critical concentration of a gelling agent in a particular composition can be calculated from measurement of the storage modulus of a series of samples containing different concentrations of gelling agent as described in Br. Polymer J. 17, (1985), 164.

If a thermo-reversible sheared gel is heated again to above the transition temperature and then cooled to e.g. ambient or refrigerator temperature under quiescent conditions a solid gel is obtained that has lost its mobility.

The transition temperature of a thermo-reversible gel is the temperature at which, upon slow temperature increase, the ordered form, be it of microscopical or macroscopical size, has disappeared completely. The transition temperature can be measured by means of differential scanning calorimetry.

A sheared gel has microscopically gelled particles. The particle size expressed as number weighted mean equivalent diameter, is normally less than 100 micron. The particle size can be determined from microscopical images using an image analyzing computer. The structure of a sheared gel is quite different to that of a broken gel that is obtained by breaking up a set gel mechanically e.g. by cutting or stirring. The fragments of a broken gel are typically much larger and they have a tendency to loose liquid.

A thermo-reversible sheared gel for use in the present method can suitably be prepared by heating the components to be included in a stirred vessel to e.g. 5-10°C above the transition temperature and then cooling the composition to e.g. 20°C or lower while applying shear e.g. by passing the composition through a scraped surface heat exchanger, e.g. a Votator ® A unit. Further methods to prepare thermo-reversible sheared gels based on non-starch polysaccharide gelling agent are described in the above cited literature e.g. EP 355 908 and EP 432 835.

The gel melting point can be determined from a plot of storage modulus G¹ against temperature. During the heating process the storage modulus decreases with increasing temperature. This behaviour is typical of polysaccharide gels. The gel melting point of the polysaccharide gel is the temperature corresponding to the inflection point of the plot of G¹ versus temperature. The transition temperature of the sheared gel is somewhat higher than its gel melting point.

The sheared gel must be based on a non-starch polysaccharide gelling agent. It cannot be based on e.g. gelatin, which is a protein. If it were tried to make such a gel from gelatin, initially an apparently suitably mobile preparation can be obtained, although its production is cumbersome because of the slow setting. However, the preparation is not sufficiently stable. Over time restructuring of the gel takes place and the preparation looses its mobility. The presence of small amounts of gelatin can be tolerated in the sheared gel, notably amounts below the critical concentration. However, preferably the sheared gel contains substantially no gelatin at all.

The present method offers several benefits in combination. The sheared gel is easy to use and easy to dispense in precise amounts. There is no need to whisk the composition to prevent the occurrence of lumps in the gelled food product. The composition can set quickly thereby allowing the gelled food product to be ready for consumption quickly, which facilitates planning. We also found that good organoleptic quality is readily obtainable. The texture of the product in the mouth as well as the taste and flavor of the gelled food product can be good. With prior art products it has often been found that the mouthfeel is not as good as desired, especially with products that can set quickly.

We have further found that our invention offers benefits with respect to syneresis. Gel systems often suffer from syneresis. This is in particular the case with gel systems containing casein. With the present semi-finished product and the present method, syneresis problems can be reduced or can even be avoided completely. We believe that this benefit can be obtained even for formulations containing casein, because of the use of the sheared gel structures.

We do not wish to be bound by theory but we believe that the presence of the globular protein contributes to obtaining this favorable combination of properties. We think that the protein globules help prevent the formation of structures upon setting of the gel that would cause the gelled part of the gelled food product to have a tough mouthfeel, while still allowing the gel to set quickly. Preferably the globular protein is dairy protein, vegetable protein or a combination thereof. Preferred vegetable globular proteins are soy protein and pea protein and combinations thereof. Most preferably the globular protein is dairy protein, the protein of white cheese, e.g. cream cheese or cream cheese alternative being particularly preferred. Further information on globular proteins is given in Food Science, Nutrition and Health 5^{th} ed, Brian Fox and Allan Cameron, (1989), publisher Edward Arnold. The amount of globular protein in the sheared gel is preferably 1.5-12 wt%, more preferably 2-6 wt%.

The gel melting point of the polysaccharide sheared gel preferably is 60-95°C, more preferably 65-90°C, especially 70-90°C.

Preferably the sheared gel is prepared with a thermo-reversible non-starch polysaccharide gelling agent selected from the group consisting of agar, kappa carrageenan, iota carrageenan, gellan, agarose, furcelleran, a combination of xanthan gum and locust bean gum, a combination of xanthan gum and konjac flour and combinations of two or more thereof. The most preferred gelling agent is agar.

When using carrageenan as a gelling agent, preferably sodium, potassium and / or calcium salt is included in the sheared gel composition, e.g. as described in EP 432 835. The incorporation of such cations strengthens the gel and raises the gel melting point.

The amount of polysaccharide gelling agent in the sheared gel typically is between 0.1 and 5 wt%, preferably between 0.2 and 3 wt%. The optimum amount depends on the composition and the type of non-starch polysaccharide gelling agent used. The amount should be above the critical concentration.

The liquid contained in the sheared gel preferably is predominantly polar liquid, notably water. It may also include e.g. ethanol. The water content of the sheared gel is preferably 45-98 wt%, more preferably 50-90 wt%. Water can be incorporated in the sheared gel as such but usually a substantial amount of the water in the sheared gel originates from for example cream, milk, cream cheese and / or alternatives therefore that have been included in the sheared gel.

The sheared gel can for example be prepared using a Votator ® e.g. as described in EP 355 908. After its preparation, the sheared gel can be filled into containers to obtain a semi-finished product. Typically, after filling the sheared gel in the containers, the containers are closed to make them suitable for transportation, prevent contamination and ensure the shelflife of the product. The instructions to the user can e.g. be provided as a leaflet with the container, be printed on a label which is glued onto the container or be printed directly onto the material that the container is made of. The instructions to the user can direct the user how the semi-finished product can be used according to the present method for preparing gelled food products.

The sheared gel may be stored frozen. When preparing the gelled food product, the frozen sheared gel can be placed in an oven, e.g. a microwave oven, and be heated to the desired temperature, e.g. 80°C directly from frozen.

To prepare the gelled food product at least a portion of the sheared gel from a container is heated to a temperature of 60-95°C. Heating can be done e.g. on a hot plate. Preferably a heating method is chosen that heats the sheared gel in a relatively uniform manner. A preferred way of heating is in a microwave oven. Other methods can be employed as well. If the heating is not relatively homogeneously throughout the composition, then suitably the composition can be stirred or mixed to avoid local overheating.

The optimal degree of heating of the sheared gel depends on the composition of the sheared gel and on the heating means applied. Preferably the heating of the sheared gel is stopped before the gel structure has molten completely. We have found that the best combination of organoleptic quality and fast setting of the gel can be obtained by using a sheared gel that has a melting point of 60-95°C, preferably 65-90°C, and heating it to a temperature of 60-95°C such that some melting of the gel structure occurs but the gel structure of the microgel particles does not disappear entirely. The temperature to which the sheared gel is heated can suitably be chosen to be within about 5°C of the gel melting point of the composition. The degree of melting of the microgel particles of a particular sheared gel that occurs during a heat treatment depends on the composition of the gel and on the method of heat transfer, temperature or heating capacity applied and the duration of the heating. Whether the gel structure of the microgel particles has disappeared completely, can be observed under a microscope.

We have found that the sheared gel composition should not be heated to a temperature above 95°C. This can also prevent boiling over of the composition, which may otherwise interfere with the desired easy and rapid preparation of the gelled food product.

In practice, a suitable heat treatment for a given amount of a particular sheared gel with a particular heating device can readily be determined by trial and error. If the set gel obtained is found to be relatively tough in the mouth or the composition begins to boil over during the heating, then a shorter heat treatment or a treatment at a lower heating capacity or a lower temperature should be tried. If it is found that the setting of the gel takes too long or setting does not occur at all, then a longer heat treatment or a heat treatment at a higher capacity or a higher temperature should be applied.

We found in practice that very good results can usually be obtained if the sheared gel composition is heated to a temperature of 65-90°C, most preferably 70-85°C and the heat treatment is stopped as soon as the target temperature has been reached.

If the amount of sheared gel needed for the intended gelled food product corresponds to the content of one or more whole containers (also referred to as packs) of sheared gel and the pack material is compatible with the heating means to be used, the whole pack or packs can be heated, if appropriate after puncturing it or otherwise making an opening therein. If the sheared gel composition already contains all the materials to be included in the gelled food product, optionally apart from decoration, and the pack is considered suitable for serving the food product in, after the heating the gel can be left to set under quiescent conditions in the pack. If so desired decoration like fresh fruit, sauce, chocolate flakes, nuts, seeds, pieces of salmon or vegetables may be put on top.

In a preferred embodiment, before the heating, sheared gel is removed from the pack and before or after the heating, the gel is put into a mould. After the heating the gel is allowed to set in the mould under quiescent conditions. Irrespective of whether the sheared gel is heated in its original pack or in e.g. a kitchen bowl, preferably, the ge1 is transferred into the mould after the heating. In this manner heating of the mould is avoided and accordingly setting of the gel can occur faster. The mould may for example be a baking tin or a flan ring on a baking sheet. The mould may also be an edible mould, e.g. made from pastry, baked dough, pavlova, meringue, etc. The mould may also be partially edible, e.g. be constituted by a holding device like a flan ring on a baking sheet provided with an edible base, e.g. a biscuit base at the bottom. The sheared gel may be poured or otherwise dispensed from the pack directly into the mould before or after the heating. If so desired, the sheared gel may be put into a beaker or other container, heated therein, and thereafter poured or otherwise transferred into the mould. In a preferred embodiment, the mould in which the gel is allowed to set is an edible mould or a holding device that contains an edible base. To enable easy handling of the sheared gel, preferably the sheared gel before the heating has a storage modulus of 500-3000 Pa. More preferably it is about 1200 Pa at 20°C.

The present method is also very suitable to prepare gelled food products containing two or more gelled layers, the layers having different compositions. Such layers preferably are made to be easily distinguishable from each other, e.g. by giving them different colors. To prepare a gelled food product with more than one gelled layer, a sheared gel composition can be put into a mould after heating and be allowed to set under quiescent conditions. Subsequently a sheared gel composition with a different composition is heated and poured onto the first layer and allowed to set under quiescent conditions. If so desired further layers can be added in a corresponding manner.

Preferably, the composition that constitutes the sheared gel constitutes at least 50 wt% of the gelled part of the gelled food product. More preferably it constitutes at least 70 wt% of the gelled part of the gelled food product. If it is desired to do so, food components may be combined with the sheared gel before or after the heating, but before setting of the gel. To prepare a quiche, for example, bouillon concentrate or pieces of meat or vegetables may be mixed into the sheared gel, or for a dessert sugar, cream, preserved fruit, chocolate flakes etc. may be stirred in. Preferably, however, in the present method the sheared gel includes all the materials that are to constitute the gelled part of the gelled food product to be prepared except for food components that have a pronounced influence on the taste or flavor profile of the food product. Incorporation of such characteristic food components allows a variety of notably different gelled food products to be prepared from a single sheared gel product. Therefore, in a preferred embodiment, at least one taste or flavor imparting food component is combined with the sheared gel composition before, during or after the heating, before the gel is set. Examples of taste or flavor imparting food components are pieces of fresh or canned fruit, spinach leaves, pieces of seeds, crushed nuts, chocolate powder or chips, fish, sugar or sweetener, etc. However, the amount of such food component combined with the sheared gel should preferably not exceed 50 wt% of the gelled part of the gelled food product, more preferably it does not exceed 30 wt% of the gelled part of the gelled food product.

Sugar may be present in the sheared gel or be included therein before the heated gel is allowed to set in the mould under quiescent conditions. However, the use of high amounts of sugars is preferably avoided in the present method. We have found that sugars may interfere with the setting of the gel. Therefore, the sheared gel and the gelled part of the gelled food product preferably do not contain more than 35 wt% of mono- and disaccharides. More preferably the amount of mono-and disaccharides in the sheared gel and in the gelled part of the food product is less than 25 wt%, especially less than 15 wt%.

After the heating, and if applicable, transferring the composition into the mould, the gel is allowed to set under quiescent conditions. This may be done by leaving the product to cool down at ambient conditions, but preferably cooling is applied, e.g. by placing the product in a refrigerator or cooling cabinet or by arranging quick replacement of the air around the product e.g. by means of a ventilator. It is not usually necessary for the gel to set to such a degree that equilibrium has been achieved, provided the gelled part of the product has set to such a degree that it has lost its mobility. Whether the gel is allowed to set further can be determined by the desired eating temperature and the wish to provide the product quickly for consumption, or instead to prepare it beforehand so that product is immediately available for consumption when desired.

The sheared gel may include ingredients like fats, cream, milk and/or sugar. Such ingredients may be included e.g. before the composition is cooled and sheared to produce the sheared gel, but they may also be incorporated after the cooling and shearing but before the packing. Also feeding them into the production line at some stage during the cooling and shearing is possible. A combination of such incorporation approaches is also possible. Corresponding approaches are possible in case the sheared gel is prepared via chemical setting of the gel. It is usually preferred to combine all ingredients early in the process before the sheared gel is beginning to set. This facilitates obtaining good shelflife, e.g. by pasteurizing or sterilizing the composition before causing the sheared gel to set.

In a preferred embodiment, the sheared gel includes food ingredients to provide a composition suitable for the preparation of cheesecake or cheesecake like products. In this embodiment the sheared gel preferably includes cream, cream alternative, cream cheese, cream cheese alternative or a combination of two or more thereof.

To provide good taste and flavor, the sheared gel includes preferably 1-50 wt%, more preferably 5-40 wt%, especially 10-35 wt% of fat. Fat indicates compositions consisting predominantly of triglycerides. They may be liquid, solid or semi-solid at ambient temperatures. Materials that can suitably be used as fat in the sheared gel include milkfat, coconut fat, sunflower oil, soybean oil, Canola oil® and similar oils having a low erucic acid content derived from rapeseed varieties, olive oil, palm oil, fractions thereof and combinations of two or more thereof. The fat can conveniently be incorporated during the preparation of the sheared gel. In this manner the fat will be present in the form of dispersed particles or droplets. Part or all of the fat can suitably be incorporated in the sheared gel by including for example cream, cream cheese, cream alternative, cream cheese alternative or a combination thereof in the sheared gel.

The sheared gel may further include minor components e.g. food acids, for example citric acid, and preservatives, for example potassium sorbate, and the like. The sheared gel may also include for example small amounts of thickeners, e.g. guar gum. Preferably, however, the sheared gel does not include substantial amounts of thickeners such as starch, whether native starch or modified starch. More preferably the sheared gel contains 0-0.5 wt% starch. Most preferably it contains no starch at all. Similarly the use of thickeners that raise the viscosity at high temperature is preferably avoided. For example, in a preferred embodiment the sheared gel is transferred after the heating into the mould, optionally after one or more food components have been stirred in, to allow the gel to set. This would be made more difficult if the sheared gel composition became very viscous upon the heating. Accordingly, the sheared gel preferably does not contain substantial amounts of hydroxypropylmethylcellulose or methylcellulose. More preferably the content of these cellulose derivatives in the sheared gel is 0-0.1 wt%. Most preferably the sheared gel does not contain these cellulose derivatives at all.

If so desired, the sheared gel may be prepared by first preparing a sheared gel of part of the ingredients to be incorporated including the gelling agent, and thereafter mixing in the other ingredients. For example a sheared gel may be prepared from agar, water, acid and preservative. This sheared gel may then be shipped in bulk to a dairy factory where soft cheese and cream are cold mixed into the sheared gel, and the final sheared gel so obtained is packed. Preferably, however, all ingredients to be incorporated in the sheared gel, are combined before the composition is cooled under shear to provide the sheared gel structure.

Throughout this specification all parts, percentages and ratios are by weight unless otherwise indicated. Except in the operating and comparative examples, or where otherwise explicitly indicated, all numbers in this description indicating amounts of material ought to be understood as modified by the word "about".

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

### Example 1

A professional chef prepared mini coffee cheesecakes using his usual recipe and preparation method as follows.

Biscuit base mix was heated on a stove for 5 minutes. Base was then placed into 8 small moulds.

Recipe for the gelled part of 8 mini cheesecakes:

| | |
|---|---|
| 15 g | gelatin |
| 2 | teaspoons liquid coffee concentrate |
| 150 g | soft brown sugar |
| 450 g | Philadelphia ® cream cheese |
| 300 ml | whipping cream |
| 300 ml | water |

The sugar and part of the water were put into a pan. The gelatin powder was sprinkled over the cold water and stirred in. The mixture was boiled and the remainder of the water was brought to the boil and added as well. This was stirred continuously. It took 11 minutes to dissolve the gelatin. This mixture was set aside and left to cool down for a few minutes.

The cream cheese and coffee concentrate were put in a food processor and mixed briefly. It was then transferred to a bowl. The cream was whipped in a Kenwood ^{™} mixer. The gelatin mixture was mixed into the cream cheese mix. Then the whipped cream was folded into the mixture. The resulting composition was poured onto the biscuit base in the moulds. The products were put in a refrigerator to set.

The total preparation time was 30 minutes. The minimum setting time to obtain products that could reasonably be consumed was 1 hour and 45 minutes. The chef commented that he usually left the product overnight to be sure that it had sufficiently set at the time of consumption.

The following composition was used for the preparation of a sheared gel:

| | |
|---|---|
| 54 | parts by weight (pbw) Philadelphia ® cream cheese ex Kraft Foods, UK |
| 1 | pbw agar |
| 19 | pbw Elmlea ® single (a cream alternative ex Van den Bergh Foods Ltd, UK consisting of a blend of buttermilk and vegetable oils. The fat content is 13 %) |
| 26 | pbw water |

The sheared gel was prepared as follows. The cream and water were put in a beaker and mixed. The agar was cold dispersed in the mixture and stirred for about 5 minutes. The mixture and the cream cheese were put in a jacketed vessel provided with a stirrer and connected to a hot water supply. The lid was closed. The stirrer was operated at low speed and the heating was turned on. The temperature was raised to 90°C and the stirrer speed was increased to 350 rpm. Then the jacket of the vessel was connected to a cold water supply. Stirring was continued until the temperature of the composition had reduced to 15°C. The composition was then poured into sterile plastic bottles of 500 ml. The lid was screwed on and the bottles were stored in a refrigerator until further use.

The sheared gel contained 4 wt% dairy protein. The mono- and disaccharide content was 3 wt%. The fat content was 15 wt%. The water content was 76 wt%. After several days storage the sheared gel was still mobile. It had a viscous, easily spoonable consistency.

The sheared gel was used to make a coffee cheesecake with the following recipe:

| | |
|---|---|
| 500 g | sheared gel |
| 50 g | soft brown sugar |
| 2 | teaspoons coffee concentrate |

Moulds with biscuit base mix were prepared as described above. The sugar, coffee concentrate and sheared gel were put in a ceramic bowl and briefly mixed. The mixture was heated in a microwave at 650 watt for 5 minutes. It was briefly stirred two times during the heating. After 5 minutes the composition had reached a temperature of 81°C. It was briefly whisked with a hand whisk. The mix was poured onto the biscuit base in the moulds and the cheesecakes were put in a refrigerator. The preparation time had been only 8 minutes. After 10 minutes in the refrigerator the gel had set and the cheesecakes were ready for consumption.

The chef judged the cheesecakes prepared from the sheared gel to have very good texture, taste and flavor. They were as good as the cheesecakes prepared with his traditional recipe. The preparation time, setting time, amount of work and the number of utensils used and to be cleaned afterwards were all markedly lower for the recipe based on the sheared gel.

### Example 2

Sheared gel was prepared from the following composition:

| | |
|---|---|
| 54 | pbw "American style full fat soft cheese" ex Yoplait, UK. (This is a cream cheese alternative, suitable for vegetarians). |
| 0.5 | pbw agar |
| 19 | pbw of a low fat cream alternative consisting of a blend of skimmed milk and vegetable fat. The fat content was 10 %.) |
| 25 | pbw water |
| 1 | pbw K-sorbate solution (10% solution) |
| 0.11 | pbw citric acid. |

The sheared gel was prepared as follows. The skimmed milk /vegetable oil blend and cream cheese alternative were placed in a mixer with the water, sorbate and citric acid. The mixer was turned on. The agar was dispersed into the mixture. The resulting mixture was fed into a scraped surface heat exchanger (SSHE) and pre-heated to 85°C. From here the product was fed into a single stage homogeniser at 500 psi. Next it was pasteurized in another SSHE at 110°C for 12 sec. The flow rate of the process was 120 1/hr. The product was cooled with water to 45 °C in a SSHE and then to 14 °C by a glycol cooled SSHE. It was stored in a sealed sterile tank before being aseptically packed using a Metal box SL1 aseptic pot filler. The product was filled into 150 ml plastic pots sealed with a foil lid and stamped with the product name and the date of manufacture.

The sheared gel contained 3 wt% protein, 4 wt% carbohydrate, 17 wt% fat and 74 wt% water.

A leaflet was prepared with Product Handling Guidelines for the users. The user was instructed to heat the product to a minimum of 75 °C for one minute, to activate the setting process. Ingredients could be added before or after the heating process. For cold serve products it was recommended to chill for 15 minutes before serving. Hot serve products would also set in 15 minutes and could be hot-held.

### Example 3

A smoked fish based gelled product was prepared from the following recipe.

| | |
|---|---|
| 250 g | QimiQ ® (QimiQ contains 1 wt% gelatin and otherwise only contains dairy cream and skimmed milk. QimiQ was obtained from Hama Foodservice, Austria.) |
| 125 g | smoked mackerel |
| 125 g | dairy cream |
| ½ teaspoon of finely chopped dill tips | |
| lemon juice | |
| white pepper | |
| salt | |
| mustard | |

The QimiQ was whisked till smooth. The smoked fish was finely chopped and added together with the seasoning and dill tips. The cream was whipped and folded into the mixture. The mixture was then filled into a mould and put in the refrigerator. The preparation time was 10 minutes (excluding cutting the fish and the dill tips).

A similar product was made using the sheared gel described in example 1. In the recipe 375 g of the sheared gel was used instead of the QimiQ and the cream. The sheared gel did not need to be whisked. After all components had been combined in a bowl, the bowl was put in a microwave and heated for 3 minutes at full capacity. The temperature reached was 72°C. The composition was then poured in the mould and placed in the refrigerator. The preparation time was 5 minutes (excluding cutting the fish and the dill tips).

After the products had been allowed to set for 60 minutes, they were removed from the refrigerator. The product based on the sheared gel had fully set. It could easily be de-moulded and retained the shape of the mould. It could be cut and its texture was smooth and creamy.

The product prepared with QimiQ had not yet set and could not be de-moulded. The volume of product obtained from the same weight of recipe was less, suggesting that it had retained less air during the preparation.

### Example 4

A chocolate based gelled product was prepared from the following recipe:

| | |
|---|---|
| 560 g | sheared gel as described in example 1 |
| 100 g | chocolate chips |
| 3 | dessert spoons crystal sugar |
| 1 | teaspoon rum |

The components were combined, briefly mixed and heated in a microwave at full power for 5 minutes. The composition reached a temperature of 80°C. The chocolate chips had molten. The composition was then briefly mixed through and poured into 4 small moulds and put in the refrigerator for 60 minutes.

For comparison a product was made from the same recipe except that the sheared gel was replaced by 250 g QimiQ ®, 62 g milk and 250 g dairy cream. The preparation process used was:
- Whisk QimiQ smooth.
- Melt the chocolate chips. Add the milk, crystal sugar and rum and mix well.
- Whip the cream and fold it in.
- Put the mix in 4 small moulds and allow the composition to become firm in the refrigerator.

The time needed to prepare the composition based on the sheared gel was considerably shorter than for the reference product. The number of utensils used, which subsequently needed to be cleaned, was smaller for the sheared gel based product. After 20 minutes in the refrigerator the sheared gel based product was fully set. It could be easily de-moulded and it retained the shape of the container. It could be cut and its texture was smooth and creamy. The reference product was non-homogeneous and lumpy. It had not yet set and could not be de-moulded in one piece. Even after 2 hours in the refrigerator the product could not be de-moulded.

### Example 5

The foil lid of a container with sheared gel prepared as described in example 2 was punctured in 2 places and the container was heated in a microwave oven at 600 watt for 1 minute and 20 seconds. The foil was removed. The temperature of the sheared gel had reached about 90°C. The heated gel composition was transferred to a kitchen bowl and about 50 g of pieces of smoked salmon and 3 g of finely cut dill were stirred in. The mixture was transferred with a spoon into small puff pastry shells. The shells were put in a refrigerator for 25 minutes. The resulting gelled food products were served as snacks.

The gelled part constituted about half of the volume of the overall gelled food product, the puff pastry shells constituting the other half. The sheared gel composition constituted about 70 wt% of the gelled part of the gelled food product, the salmon and the dill constituting the other 30 wt%.

### Example 6

The foil lid of a container with sheared gel as described in example 2 was punctured in 2 places. The container was heated in a microwave oven at 600 watt for 1 minute and 10 seconds. The closing foil was removed. Two table spoons of Tia Maria ® coffee liqueur were stirred into the heated gel composition. The container was covered with alufoil and put in the refrigerator for 3 hours. It was then used as dessert.

The gelled food product consisted entirely of the gelled part. The sheared gel composition constituted about 80 wt% of the gelled part of gelled food product.

### Example 7

Containers with sheared gel as described in example 2 were stored frozen at -18°C for several weeks. The foil lid of such a container was punctured and the container was heated in a microwave oven until the sheared gel reached a temperature of 80°C. The foil lid was removed and the product was allowed to cool and set in the container. The product set as normal and showed no damage.

### Example 8

Using a jacketed waterbath with stirrer, 2 pbw of agar were dispersed in 98 pbw water. The mixture was heated to 90°C and kept at that temperature for 10 minutes while stirring was continued. The composition was cooled to 15°C over a 2.5 hour period while stirring. The resulting agar sheared gel was stored at 5°C.

Recipe used

| | |
|---|---|
| 54.3 pbw | soft cheese as described in Example 2 |
| 19.0 pbw | Elmlea ® single (see example 1) |
| 25.1 pbw | agar sheared gel (2%) |
| 1.0 pbw | 10% K-sorbate solution |
| 0.1 pbw | citric acid |
| 0.5 pbw | water. |

### Method A:

All ingredients except the soft cheese were blended in a food processor for 1 minute. The soft cheese was added and the composition was mixed for 30 seconds to obtain the sheared gel.

### Comparative method B:

All ingredients except the agar sheared gel were blended for 1 minute in a food processor. The agar sheared gel was heated in a microwave to 90°C and then added directly to the food processor. The composition was mixed for 30 seconds.

Samples of each of the two methods were heated to 80°C and cooled and left to set in a mould. The sample from method A was similar to those obtained from sheared gels as described in examples 1 and 2, although the taste was not quite as good and the set product was relatively firm. The sample from comparative method B showed quite a lot of syneresis.

### Example 9

Trials were done using different types and amounts of gelling agent and salt.

Sheared gel compositions

| | |
|---|---|
| 53.7 pbw | full fat soft cheese (28% fat) as described in example 2 |
| 18.8 pbw | Elmlea ® single (see example 1) |
| 25.82 pbw | water |
| 0.01 pbw | citric acid |
| 0.1 pbw | K-sorbate (10% solution) |
| | gelling agent |
| | salt |

The type and amount of gelling agent and salt were as follows

| | |
|---|---|
| Ex 9a: | 0.5 pbw Kappa carrageenan |
| | 0.3 pbw NaCl (10% solution in water) |
| Ex 9b: | 0.6 pbw iota carrageenan |
| | 0.5 pbw CaCl₂.2H₂O (10% solution) |
| Ex 9c: | 0.6 pbw gellan |
| | 0.5 pbw CaCl₂.2H₂O (10% solution) |
| Ex 9d: | 0.6 pbw Kappa carrageenan with 25% furcelleran |
| | 0.6 pbw CaCl₂.2H₂O (10% solution) |

### Sheared gel preparation:

The K-sorbate, water, Elmlea ® and citric acid were placed in a jacketed heating vessel. The gelling agent was added slowly with stirring and stirring was continued for 5 minutes. The soft cheese was added and the mix heated to 50°C. Then the salt was added. The mixture was heated to 90°C, kept at that temperature for 10 minutes and then cooled down over 2 hours to below 15°C. Stirring was continued through the whole preparation. The sheared gel was stored at 5°C.

### Preparation of raspberry mousse:

125 g of the sheared gel was heated in a microwave oven to 80°C. After the heating 20 g raspberry puree and 15 g sugar were stirred in. The mixture was poured in a small bowl and placed in a refrigerator at 5°C to allow it to set.

The sheared gels obtained were relatively thick. The raspberry mousse was somewhat salty. Overall, the sheared gels were not as convenient to use as the sheared gel based on agar. The taste and texture of the gelled food products obtained were not as good as those obtained with sheared gel based on agar.

### Example 10

A series of trials were done with 2 different types of soft fresh cheese. Their composition was as follows

| soft fresh cheese | Milklink ®* | Blackmore Vale ®** |
|---|---|---|
| composition (wt%) | | |
| water | 54 | 60 |
| fat | 31 | 31 |
| protein | 6.4 | 8.6 |
| carbohydrate | 6.0 | trace |

| | | |
|---|---|---|
| * Milklink ® full fat soft cheese, a soft fresh cheese, is available from Milklink Ltd, Staplemead Creamery, Frome, Somerset, UK ** Blackmore Vale ® American style full fat soft cheese, a soft fresh cheese is available from Blackmore Vale Farm Cream Ltd, Shaftesbury, Dorset, UK. | | |

Sheared gels were prepared using the following recipes, expressed in pbw

| Example | 10A | 10B | 10C | 10D | 10E |
|---|---|---|---|---|---|
| Milklink ® | 51 | 51 | 48 | 54 | - |
| Blackmore Vale ® | - | - | - | - | 51 |
| Skimmed milk | 18.9 | 18.9 | 18.9 | 18.9 | 18.9 |
| Dairy cream (48% fat) | - | 2.44 | - | - | 2.44 |
| Water | 29.5 | 27.05 | 32.5 | 26.5 | 27.05 |
| Agar | 0.5 | 0.5 | 0.5 | 0.5 | 0.5 |
| Citric acid | 0.085 | 0.11 | 0.085 | 0.09 | 0.14 |

The sheared gels were prepared as described in example 9, mutatis mutandis. All products obtained had good consistency. They were convenient to use. Their composition was as follows (expressed as wt%)

| Example | 10A | 10B | 10C | 10D | 10E |
|---|---|---|---|---|---|
| Water | 74 | 73 | 76 | 73 | 76 |
| Protein | 3.9 | 3.9 | 3.7 | 4.1 | 5.0 |
| Fat | 16 | 17 | 15 | 17 | 17 |
| Carbohydrate | 4.5 | 4.5 | 4.3 | 4.6 | 1.5 |

These sheared gels can suitably be used to prepare gelled food products, for example raspberry mousse, using the recipe and preparation method described in example 9.

## Claims

1. Method for preparing a gelled food product comprising heating thermo-reversible sheared gel that is based on non-starch polysaccharide gelling agent and that comprises at least 1 wt% globular protein, to a temperature of 60-95°C and allowing the gel to set in a mould under quiescent conditions, wherein the sheared gel is a gel that has been sheared during setting of the gel to provide a gel in a mobile condition.

2. Method according to claim 1 wherein the sheared gel is heated to a temperature of 65-90°C.

3. Method according to claim 1 or claim 2 wherein the heating is stopped before the gel structure has molten completely.

4. Method according to any one of claims 1-3 wherein the polysaccharide gel melting point is 60-95°C.

5. Method according to any one of claims 1-4 wherein the mould is an edible mould or a holding device that contains an edible base.

6. Method according to any one of claims 1-5 wherein the composition that constitutes the sheared gel constitutes at least 50 wt% of the gelled part of the gelled food product.

7. Method according to any one of claims 1-6 wherein at least one taste or flavour imparting food component is combined with the sheared gel composition before, during or after the heating, before the gel is set.

8. Method according to any one of claims 1-7 wherein during the setting of the gel cooling is applied.

9. Method according to any one of claims 1-8 wherein the sheared gel comprises a thermo-reversible gelling agent selected from the group consisting of agar, kappa carrageenan, iota carrageenan, gellan, agarose, furcelleran, a combination of xanthan gum and locust bean gum, a combination of xanthan gum and konjac flour and combinations of two or more thereof.

10. Method according to anyone of claims 1-9 wherein the globular protein is dairy protein, vegetable protein or a combination thereof.

11. Method according to any one of claims 1-10 wherein the sheared gel comprises 1-50 wt% fat.

12. Method according to any one of claims 1-11 wherein the sheared gel comprises cream, cream cheese, or a combination thereof.

## Patentansprüche

1. Verfahren zur Herstellung eines gelierten Nahrungsmittelproduktes, umfassend Erwärmen eines thermoreversiblen, scherbehandelten Gels, das auf Nicht-Stärke-Polysaccharid-Geliermittel basiert und das wenigstens 1 Gew.-% globuläres Protein umfasst, auf eine Temperatur von 60-95% und Erstarrenlassen des Gels in einer Form unter Ruhebedingungen, wobei das scherbehandelte Gel ein Gel ist, das während des Erstarrens des Gels scherbehandelt wurde, um ein Gel in einem mobilen Zustand bereitzustellen.

2. Verfahren nach Anspruch 1, wobei das scherbehandelte Gel auf eine Temperatur von 65-90°C erwärmt wird.

3. Verfahren nach Anspruch 1 oder Anspruch 2, wobei das Erwärmen gestoppt wird, bevor die Gelstruktur vollständig geschmolzen ist.

4. Verfahren nach einem der Ansprüche 1 bis 3, wobei der Poylsaccharidgel-Schmelzpunkt 60-95°C ist.

5. Verfahren nach einem der Ansprüche 1 bis 4, wobei die Form eine essbare Form oder eine Haltevorrichtung, die eine essbare Grundlage enthält, ist.

6. Verfahren nach einem der Ansprüche 1 bis 5, wobei die Zusammensetzung, die das scherbehandelte Gel bildet, wenigstens 50 Gew.-% des gelierten Teils des gelierten Nahrungsmittelprodukts ausmacht.

7. Verfahren nach einem der Ansprüche 1 bis 6, wobei wenigstens eine Geschmack- oder Aroma-verleihende Komponente mit der scherbehandelten Gelzusammensetzung vor, während oder nach dem Erwärmen, bevor das Gel erstarrt ist, kombiniert wird.

8. Verfahren nach einem der Ansprüche 1 bis 7, wobei während des Erstarrens des Gels Kühlung angewendet wird.

9. Verfahren nach einem der Ansprüche 1 bis 8, wobei das scherbehandelte Gel ein thermoreversibles Geliermittel umfasst, das aus der Gruppe, bestehend aus Agar, Kappa-Carrageenan, Iota-Carrageenan, Gellan, Agarose, Furcelleran, einer Kombination aus Xanthangummi und Johannisbrotkerngummi, einer Kombination aus Xanthangummi und Konjakmehl und Kombinationen aus zwei oder mehr davon, ausgewählt wird.

10. Verfahren nach einem der Ansprüche 1 bis 9, wobei das globuläre Protein Milchprotein, Pflanzenprotein oder eine Kombination davon ist.

11. Verfahren nach einem der Ansprüche 1 bis 10, wobei das scherbehandelte Gel 1 bis 50 Gew.-% Fett umfasst.

12. Verfahren nach einem der Ansprüche 1 bis 11, wobei das scherbehandelte Gel Sahne, Rahmkäse oder eine Kombination davon umfasst.

## Revendications

1. Méthode pour préparer un produit alimentaire gélifié comprenant le chauffage d'un gel cisaillé thermoréversible qui est à base d'agent gélifiant de polysaccharide non amylacé et qui comprend au moins 1 % en poids de protéine globulaire, à une température de 60-95°C et le durcissement du gel dans un moule dans des conditions de repos, dans laquelle le gel cisaillé est un gel qui a été cisaillé pendant le durcissement du gel pour donner un gel dans un état mobile.

2. Méthode selon la revendication 1, dans laquelle le gel cisaillé est chauffé à une température de 65-90°C.

3. Méthode selon la revendication 1 ou la revendication 2, dans laquelle le chauffage est arrêté avant que la structure du gel ait complètement fondu.

4. Méthode selon l'une quelconque des revendications 1 à 3, dans laquelle le point de fusion du gel polysaccharide est de 60-95°C.

5. Méthode selon l'une quelconque des revendications 1 à 4, dans laquelle le moule est un moule comestible ou un dispositif de support qui contient une base comestible.

6. Méthode selon l'une quelconque des revendications 1 à 5, dans laquelle la composition qui constitue le gel cisaillé constitue au moins 50 % en poids de la partie gélifiée du produit alimentaire gélifié.

7. Méthode selon l'une quelconque des revendications 1 à 6, dans laquelle au moins un ingrédient alimentaire donnant un goût ou un arôme est combiné à la composition de gel cisaillé avant, pendant ou après le chauffage, avant durcissement du gel.

8. Méthode selon l'une quelconque des revendications 1 à 7, dans laquelle pendant le durcissement du gel, un refroidissement est appliqué.

9. Méthode selon l'une quelconque des revendications 1 à 8, dans laquelle le gel cisaillé comprend un agent gélifiant thermoréversible choisi dans le groupe consistant en l'agar-agar, la κ-carraghénane, l' 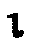 -carraghénane, la gellane, l'agarose, le furcellerane, une combinaison de gomme de xanthane et de gomme de caroube, une combinaison de gomme de xanthane et de farine de konjac et une combinaison de deux ou plusieurs de ces éléments.

10. Méthode selon l'une quelconque des revendications 1 à 9, dans laquelle la protéine globulaire est une protéine laitière, une protéine végétale ou une combinaison de celles-ci.

11. Méthode selon l'une quelconque des revendications 1 à 10, dans laquelle le gel cisaillé comprend 1-50% en poids de matières grasses.

12. Méthode selon l'une quelconque des revendications 1 à 11, dans laquelle le gel cisaillé comprend de la crème, du fromage frais ou une combinaison de ceux-ci.
